# EUROPEAN PATENT APPLICATION

(11) **EP 3 671 550 A1**
(43) Date of publication of application: **24.06.2020**
(21) Application number: 19219017.1
(22) Date of filing: 20.12.2019
(51) Int. Cl.: G06K 9/00, G06K 9/46, G06K 9/62

(54) **DYNAMICALLY LOADED NEURAL NETWORK MODELS**

(30) Priority: 20.12.2018 US 201816227144
(71) Applicant: HERE Global B.V., 5611 ZT Eindhoven (NL)
(72) Inventor: FOWE, James, Chicago, IL 60606 (US)
(74) Representative: Potter Clarkson

(57) **Abstract**

An apparatus and method for analyzing data collected at a vehicle through dynamic selection of a neural network is described. Sensor data collected at the vehicle is received. A neural network request based on the sensor data is send to a server. In response to the request, a neural network is downloaded from the server. Image data or video data is collected at the vehicle, and an analysis of the image data or video data using the neural network downloaded from the server is performed.

## Description

### FIELD

The following disclosure relates to neural networks for image analysis, and more specifically, driving assistance based on analysis of images collected at a vehicle.

### BACKGROUND

Object detection is an important task in computer vision for computers to understand the world and make reactions. Neural network models have been demonstrated to be effective on object detection. Objection detect is applicable to a variety of technological fields including, but not limited to, navigation, driving assistance, and autonomous driving. Neural network models may be designed to analyze certain images in these fields.

The detection of the surrounding of vehicles may be challenging. Vehicles may face a variety of environments, and training a neural network model of a massive set of data for the variety of environments may results in a neural network model that is very large. Large neural network models may not indicate into a mobile application and may require either a very high computational power including resources such as memory and multiple graphics processing units (GPUs) with additional memory.

### SUMMARY

In one embodiment, a method or analyzing data collected at a vehicle through dynamic selection of a neural network includes receiving sensor data collected at the vehicle, sending a neural network request based on the sensor data to a server, downloading a neural network from the server, receiving image data collected at the vehicle, and performing, via a processor, an analysis of the image data using the neural network downloaded from the server.

In one embodiment, an apparatus for vehicle parking navigation and communication includes an environment module, a road network module, a monitor condition engine, and a neural network module. The environment module is configured to sample at least one type of sensor data collected at a vehicle. The road network module is configured to sample location data collected at the vehicle. The monitor condition engine is configured to analyze the sensor data and the location data to generate a neural network request. The neural network module is configured to operate a neural network in response to the neural network request.

In one embodiment, an apparatus for managing multiple neural networks for driving conditions comprises a neural network database, a communication interface, and a neural network controller. The neural network database is configured to store a plurality of neural networks. The communication interface is configured to receive condition data for a vehicle from a vehicle device. The neural network controller is configured to select a neural network from the plurality of neural networks such that data for the neural network is sent to the vehicle device via the communication interface.
The following numbered paragraphs are also disclosed:
1. A method for analyzing data collected at a vehicle through dynamic selection of a neural network, the method further comprising:
   receiving sensor data collected at the vehicle;
   generating a neural network request;
   selecting a neural network, from a plurality of neural networks, based on the neural network request and the sensor data;
   receiving image data collected at the vehicle; and
   performing, via a processor, an analysis of the image data using the selected neural network.
2. The method of paragraph 1, further comprising:
   sending the neural network request based on the sensor data to a server; and
   downloading the selected neural network from the server.
3. The method of paragraph 1, further comprising:
   identifying a driving condition from the sensor data, wherein the neural network request includes the driving condition.
4. The method of paragraph 2, wherein the neural network downloaded from the server is trained on sensor data related to the driving condition and the neural network is selected from the plurality of neural networks according to the driving condition.
5. The method of paragraph 1, wherein the sensor data includes light sensor values, humidity sensor values, pressure sensor values or temperature sensor values.
6. The method of paragraph 1, wherein the sensor data includes location data associated with a location of the vehicle.
7. The method of paragraph 6, further comprising:
   identifying a geographic or topographic environment of the vehicle, wherein the neural network request includes a driving condition based on the geographic or topographic environment of the vehicle.
8. The method of paragraph 1, wherein the sensor data indicates time of day, season, or weather in vicinity of the vehicle.
9. The method of paragraph 1, further comprising:
   filtering the sensor data collected at the vehicle; and
   sending the filtered sensor data, wherein the neural network is trained using the filtered sensor data.
10. An apparatus for vehicle parking navigation and communication, the apparatus further comprising:
   an environment module configured to sample at least one type of sensor data collected at a vehicle;
   a road network module configured to sample location data collected at the vehicle;
   a monitor condition engine configured to analyze the sensor data and the location data to generate a neural network request; and
   a neural network module configured to operate a neural network in response to the neural network request.
11. The apparatus of paragraph 10, further comprising:
   an image sensor configured to collect image data, wherein the neural network analyzes the image data.
12. The apparatus of paragraph 10, wherein the monitor condition engine is configured to identify a driving condition based on the sensor data, the location data, or a combination of the sensor data and the location data.
13. The apparatus of paragraph 12, wherein the driving condition is an environmental condition in vicinity of the vehicle or a geographical or topographical condition in vicinity of the vehicle.
14. The apparatus of paragraph 12, further comprising:
   a memory configured to store a plurality of neural networks, wherein the operated neural network is selected from the plurality of neural networks in response to the neural network request.
15. The apparatus of paragraph 12, wherein the neural network is downloaded to the vehicle and trained on sensor data related to the identified driving condition.
16. The apparatus of paragraph 12, wherein the neural network is selected from a plurality of neural networks according to the driving condition.
17. The apparatus of paragraph 12, wherein the monitor condition engine is configured to filter the sensor data collected at the vehicle and send the filtered sensor data to a server, wherein the neural network is trained using the filtered sensor data.
18. An apparatus for managing multiple neural networks for driving conditions, the apparatus comprising:
   a neural network database configured to store a plurality of neural networks;
   a communication interface configured to receive condition data for a vehicle from a vehicle device; and
   a neural network controller configured to select a neural network from the plurality of neural networks.
19. The apparatus of paragraph 18, wherein the condition data is real time data for a vicinity of the vehicle device.
20. The apparatus of paragraph 18, wherein the condition data describes an attribute of a path traveled by the vehicle device.

### BRIEF DESCRIPTION OF THE DRAWINGS

Exemplary embodiments of the present invention are described herein with reference to the following drawings.
Figure 1 illustrates an example system for dynamically loading neural networks based on driving conditions.
Figure 2 illustrates an example framework for the neural network controller of the system of Figure 1.
Figure 3 illustrates an example server implementation of the neural network controller.
Figure 4 illustrates an example flow chart for the operations of the server.
Figure 5 illustrates an example mobile device implementation of the neural network controller.
Figure 6 illustrates an example flow chart for the operations of the mobile device.
Figure 7 illustrates exemplary vehicles of the systems of Figure 1.
Figures 8 and 9 illustrate example geographic databases.

### DETAILED DESCRIPTION

Neural networks may be employed to analyze images collected at a vehicle. The images may be collected from the perspective of a roadway or another path. The images may be forward images that include objects in the forward direction (in front of) the vehicle. The images may be street side images that include object to the sides of the vehicles. While driving, the human vision system effortlessly identifies everything in the field of vision ranging from roads, sidewalks, pedestrians, traffic-lights, signs, and other features or objects. However, discerning these objects or features from camera-captured images by a computer is quite a complex task.

Vehicle-collected images may be used in a variety of technologies. For example, identified features or objects may be applied to autonomous driving systems or assisted driving systems. The autonomous driving systems may generate driving commands in response to the location of objects. The assisted driving systems may generate driver warnings or supplemental assistance commands in response to the locations of objects. Localization also may be performed in response to the identified objects or features. For example, the location of a user or vehicle may be determined according to the known location of objects detected in the vicinity of the user or vehicle. Finally, the identified objects or features from the side images may be applied to three-dimensional models and mapping database.

The following embodiments include dynamically loaded neural networks. Different neural networks may be trained for different conditions or scenarios. One neural network may be trained on data collected in winter conditions, and another neural network may be trained on data collected in summer conditions. One neural network may be trained on data collected in daytime conditions, and another neural network may be trained on data collected in nighttime conditions. One neural network may be trained on data collected in rainy conditions, and another neural network may be trained on data collected in dry conditions. One neural network may be trained on data collected in urban conditions, and another neural network may be trained on data collected in rural conditions. Subsequently, as a vehicle travels and collects video data, additional sensor data that describes the conditions in the vicinity of the vehicle is collected. In response to the additional data that describes the conditions, one of the neural networks is selected and downloaded. The video data is analyzed by the downloaded by the selected neural network.

The following embodiments relate to several technological fields including but not limited to navigation, autonomous driving, assisted driving, traffic applications, and other location-based systems. The following embodiments achieve advantages in each of these technologies because an increase in the accuracy of object classifications improves the effectiveness, efficiency, and speed of specific application in these technologies. In each of the technologies of navigation, autonomous driving, assisted driving, traffic applications, and other location-based systems, identifications of objects in collected images improves the technical performance of the application. In addition, users of navigation, autonomous driving, assisted driving, traffic applications, and other location-based systems are more willing to adopt these systems given the technological advances in object classification.

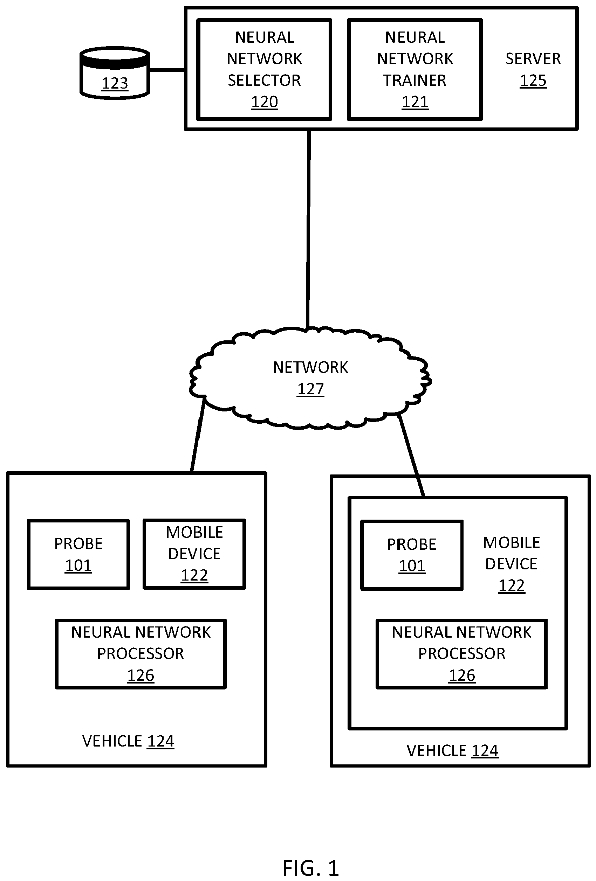

Figure 1 illustrates an example system for dynamically loaded neural networks. The system includes a server 125 and a mobile device 122 connected by a network 127. The server 125 includes a neural network selector 120 and a neural network trainer 121, which may be referred to collectively or individually as the neural network generator or neural network controller. The neural networks may be stored in database 123, which may additionally include a geographic database or map database.

The mobile device 122, or multiple mobile devices, collects the probe data and the server 125 performs the following algorithms on the probe data. The vehicles 124 may be directly connected to the server 125 or through an associated mobile device 122. The server 125 and the geographic database 123, exchanges (e.g., receives and sends) data from the vehicles 124. The mobile device 122 may include a neural network processor 126 that operate or executes the neural networks. The neural network processor 126 may be referred to as a neural network controller. Additional, different, or fewer components may be included.

The mobile device 122 may include mapping applications, navigational applications, or driving applications, which utilize the neural network analysis of data collected at the vehicle. The driving applications may calculate driving commands for controlling a vehicle. The driving applications may generate warnings or other messages for a driver or passenger of the vehicle. Localization may be performed using the neural network analysis of data collected at the vehicle. In localization, objects or features detected from the sensor are compared to a fingerprint or template of known objects or features that is tied to a geographic location. The mapping applications may provide maps including the location of the vehicle as determined by the localization. The navigational applications may present routes (e.g., turn-by-turn directions) that are calculated according to the neural network analysis of data collected at the vehicle.

The mobile devices 122 may include local databases corresponding to a local map, which may be modified by to the server 125 using the geographic database 123. The local map may include a subset of the geographic database 123 and is updated or changed as the vehicles 124 travel. The mobile devices 122 may be standalone devices such as smartphones or devices integrated with vehicles. In some embodiments the local maps are modified according to data collected by the mobile device 122 or vehicle 124. In other embodiments, the collected data is transferred to the server 125 for augmenting the geographic database 123.

Each vehicle 124 and/or mobile device 122 may include position circuitry (e.g., probe 101) such as one or more processors or circuits for generating probe data. The probe data may be generated by receiving GNSS signals and comparing the GNSS signals to a clock to determine the absolute or relative position of the vehicle 124 and/or mobile device 122. The probe data may be generated by receiving radio signals or wireless signals (e.g., cellular signals, the family of protocols known as WiFi or IEEE 802.11, the family of protocols known as Bluetooth, or another protocol) and comparing the signals to a pre-stored pattern of signals (e.g., radio map). The mobile device 122 may act as probe 101 for determining the position or the mobile device 122 and the probe 101 may be separate devices.

The probe data may include a geographic location such as a longitude value and a latitude value. In addition, the probe data may include a height or altitude. The probe data may be collected over time and include timestamps. In some examples, the probe data is collected at a predetermined time interval (e.g., every second, ever 100 milliseconds, or another interval). In some examples, the probe data is collected in response to movement by the probe 101 (i.e., the probe reports location information when the probe 101 moves a threshold distance). The predetermined time interval for generating the probe data may be specified by an application or by the user. The interval for providing the probe data from the mobile device 122 to the server 125 may be may the same or different than the interval for collecting the probe data. The interval may be specified by an application or by the user.

Communication between the vehicles 124 and/or between the mobile device 122 and the server 125 through the network 127 may use a variety of types of wireless networks. Example wireless networks include cellular networks, the family of protocols known as WiFi or IEEE 802.11, the family of protocols known as Bluetooth, or another protocol. The cellular technologies may be analog advanced mobile phone system (AMPS), the global system for mobile communication (GSM), third generation partnership project (3GPP), code division multiple access (CDMA), personal handy-phone system (PHS), and 4G or long term evolution (LTE) standards, 5G, DSRC (dedicated short range communication), or another protocol.

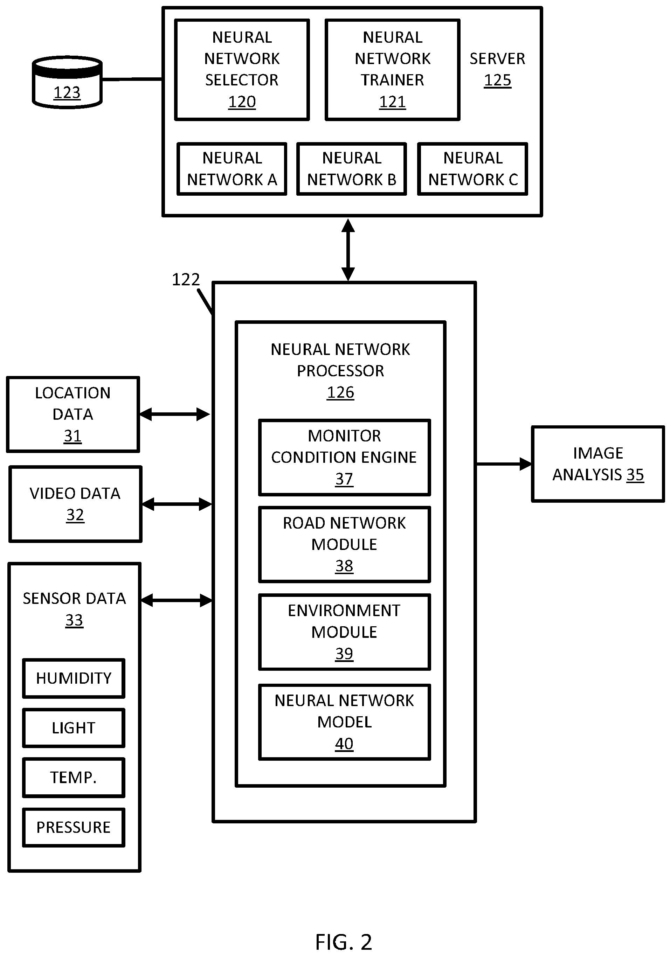

Figure 2 illustrates an example framework for implementing the neural network processor 126 including a monitor condition engine 37, a road network module 38, an environment module 39, a neural network module 40. In addition, Figure 2 illustrates server 125 including the neural network selector 126 and the neural network trainer 121. Additional, different, or fewer components may be included.

The mobile device 122 may collect location data 31, video data 22, and sensor data 33, which is relayed to the neural network trainer 121 for generation of or modification of multiple neural networks. The video data 22 may be collected by a camera mounted on the inside or outside of the vehicle 124.

The sensor data 33 may include ambient properties of the vicinity of the vehicle 124. The ambient properties may include ambient light values, temperature values and/or humidity values. The ambient light values may be detected by a light sensor. The ambient light values describe the brightness or intensity of the light at the vehicle 124. The light may indicate time of day, time of year, and the amount of cover (whether there is vegetation or buildings above the vehicle 124).

The temperature values describe the temperature around the vehicle. The temperature values may be detected by a temperature sensor or thermometer. The temperature may suggest time of day, time of year, and the type of precipitation, if applicable, in the vicinity of the vehicle.

The humidity values describe the humidity or presence of water around the vehicle 124. The humidity values may be detected by a humidity sensor, which may be capacitive, resistive, or thermal conductive. The humidity values may suggest the type of precipitation, if applicable, in the vicinity of the vehicle.

The sensor data 33 may include pressure values that describe the air pressure around the vehicle 124. The pressure values may be detected by a pressure sensor. The pressure values may be an ambient property of the vehicle 124 but may be used to determine the height or altitude of the vehicle, which may be considered part of the location data 31.

The sensor data 33 may include sky values that indicate whether or not the sky is visible from the vehicle. The sky values may be determined by a laser or other distance detect that is point from the vehicle 124 to the sky. When the sky is visible the sky values have a first value and when the sky is not visible the sky values have a second vehicle. When the sky is partially blocked by vegetation, for example, the sky values may have a partial value.

The location data 31 may include geographic coordinates derived from the probe data collected by probes 101. Values for the location data 31 may be associated with the sensor data 33. That is, the sensor data 33 may be paired with geographic coordinates from the location data 31.

The video data 132 may be associated with the location data 31 and the sensor data 33, for example, according to timestamps. Each vehicle 124 and/or mobile device 122 may include a camera or other sensor configured to detect and collect data for the surroundings of the vehicle 124 and/or mobile device 122. The camera or other sensor data may be coupled with image processing circuitry to analyze the data. Images may be collected by a camera or a charge coupled device (CCD) that is traveling along the roadway. The camera may be a visible spectrum camera, an infrared camera, an ultraviolet camera or another camera. The camera may be mounted on the vehicle 124 driven along the roadway.

The video data 132 may be analyzed by a human operator or crowdsourcing efforts in order to classify the contents of the video data 132. The result of the classification may indicate a category for the roadway in the video data 132. Example categories may include: there is an obstacle in the path, there is an oncoming vehicle, there is a dangerous condition, or another category. The result of the classification may indicate the identification of objects in the video data 132. Example objects may include curbs, trees, lane lines, vehicles, or other objects. Location based example categories may include a rural setting, an urban setting, a forest setting, a desert setting, a mountainous setting, or other settings.

The manual or crowdsourced identification of the conditions or objects in the video data 132 is ground truth for training the neural network. The neural network trainer 121 is provided with pixel values from the video data 132. The neural network trainer 121 may generate one or more coefficients or weights according to the ground truth and the video data 132.

The neural network trainer 121 may receive the location data 31 and the sensor data 33 and train one or more neural networks according to the location data 31 and the sensor data 33 using the video data 132. The neural network trainer 121 may train multiple neural networks.

The neural network trainer 121 may create multiple neural networks (e.g., neural network A, neural network B, and neural network C) according to the sensor data 33. In some examples, the multiple neural networks are predefined. For example, the server 125 may assign a set of neural networks according to various conditions that may exist in the vicinity of the vehicle 124. For example, the server 125 may define a winter neural network for winter conditions, a rainy neural network for raining conditions, and other neural networks. Each of the neural networks may be associated with a data filter that filters or defines the data that should be provided to a specific neural network. For example, the winter neural network may have a filter that includes data only when the temperature is in a predetermined range (e.g., less than 10 Celsius or less than 40 Fahrenheit), and the rainy neural network may have a filter that includes data only when the humidity is above a predetermined level. In some examples, any specific value in the sensor data 33 is routed to a single neural network. In other embodiments, the same data may be routed to multiple neural network (e.g., data for a rainy day in January may be used to train both the snowy neural network and the rainy neural network).

The neural network trainer 121 may create multiple neural networks according to the location data 31. One of the neural networks may be trained according to data collected in rural areas. One of the neural networks may be trained according to data collected in suburban areas. One of the neural networks may be trained according to data collected in urban areas. The location data 31 may be compared to geographic areas that are associate with rural, suburban, or urban areas in order to route the collected data for the training of specific neural networks.

The neural network trainer 121 may create multiple neural networks according to the location data 31 for topographical features. One of the neural networks may be trained according to data collected in mountainous areas. One of the neural networks may be trained according to data collected in forest or high vegetation areas. One of the neural networks may be trained according to data collected in desert or low vegetation areas. The location data 31 may be compared to geographic areas that are associate with mountains, forests, or deserts areas in order to route the collected data for the training of specific neural networks.

The neural network trainer 121 may create multiple neural networks according to the location data 31 and driving customs. One of the neural networks may be trained according to data collected in a specific country or area where drivers follow a first set of driving customs. One of the neural networks may be trained according to data collected in another country or area where drivers follow a second set of driving customs. For example, the driving customs may indicate how closer a vehicle tends to follow a preceding vehicle. The driving customs may indicate how likely a vehicle is to laterally stay in the center of a lane. The driving customs may indicate the likelihood of a full stop at a stop sign or a right turn on red.

The neural network trainer 121 may create multiple neural networks according to the location data 31 and one or more attributes from the geographic database 123. The attributes may be road attributes related to the shape, curvature, slope, functional classification, speed limit or other aspects of the road segments. One of the neural networks may be trained according to data collected on roads with a first attribute. One of the neural networks may be trained according to data collected on roads with a second attribute.

The neural network trainer 121 may create multiple neural networks according to the type of vehicle. Example types of vehicle include bus, car, truck and others. The type of vehicle may be encoded in the sensor data collected by the vehicle 124. The type of vehicle may be determined from the height (e.g., altitude) of the sensor data. The type of vehicle may be determined from the angle or orientation of image data collected at the vehicle. One of the neural networks may be trained according to data collected on roads by a first type of vehicle. One of the neural networks may be trained according to data collected on roads by a second type of vehicle.

In one embodiment, the neural network trainer 121 may automatically determine when a new type of neural network should be generated. For example, the neural network trainer 121 may train a first neural network on the sensor data 33 and determine when a new condition exists in the sensor data 33. For example, the neural network trainer 121 may generate, in response to the identification of the new condition in the sensor data, a second neural network. The neural network trainer 121 may filter data according to the new condition in order to route subsequent data into the first neural network or the second neural network (e.g., for training and for analysis).

The neural network trainer 121 is provided the ground truth values and analysis the video data 132 according to the ground truth. That is, the neural network trainer 121 may develop a network of coefficients or weights that based on the known contents of the video data 132 (e.g., the identified objects or a category for the conditions of the roadway). The network of coefficients or weights may be arranged in layers (e.g., convolutional layers).

The neural network selector 120 may select one of the trained neural networks (e.g., neural network A, neural network B, or neural network C) based on a request received from the mobile device 122. The request may specify a specific neural network. Alternatively, the request may include sensor data 33 (e.g., a sample of the sensor data) collected by the mobile device. In another example, the request may include an indicator of the conditions in the vicinity of the vehicle 124. In other words, the neural network processor 126 may determine the conditions near the vehicle 124 and send the request that includes an indicator of the conditions. In response to the request, the neural network selector 120 selects the appropriate neural network and transmits data for the model of the neural network to the mobile device 122.

The mobile device 122 generates the request. In one example, the environment module 39 sample at least one type of sensor data 33 collected at the vehicle 124. As described above, the sensor data 33 may include humidity data, light data, temperature data, and pressure data. The road network module 38 is configured to sample the location data 31 collected at the vehicle 124.

The monitor condition engine 37 is configured to analyze the sensor data 33 and the location data 31 to generate a neural network request. The sensor data 33 may indicate the environment of the vehicle, for example, for time of day, season of the year, or weather. The location data 31 may indicate the environment of the vehicle based on geographic or topographic surroundings. The neural network request may include a sample of the sensor data 33 and/or location data 31. The neural network request may include the categorization of the data as determined by the monitor condition engine 37.

The neural network module 40 is configured to operate a neural network downloaded in response to the neural network request and the selection made by the neural network selector 120. The mobile device 122 receives the model of the selected neural network and the neural network processor 126 operates in the inference mode. In the inference mode, the neural network trainer 121 may analyze subsequent video data (e.g., video data 132) using the network of coefficients or weights. That is, pixel values from the subsequent video data may be multiplied by the coefficients or weights in multiple combinations and compared to threshold values in order to determine whether sets of the pixel values correspond to specific objects or scenarios for the vicinity of the vehicle 124. The training mode and inference mode may be performed sequentially (e.g., first the training mode then the inference mode) or simultaneously.

In one embodiment, the neural network trainer 121 and the neural network selector 120 are implemented by the mobile device 122. That is the multiple neural networks are developed and trained locally at the mobile device and later selected according to the sensor data and/or driving condition identified at the mobile device.

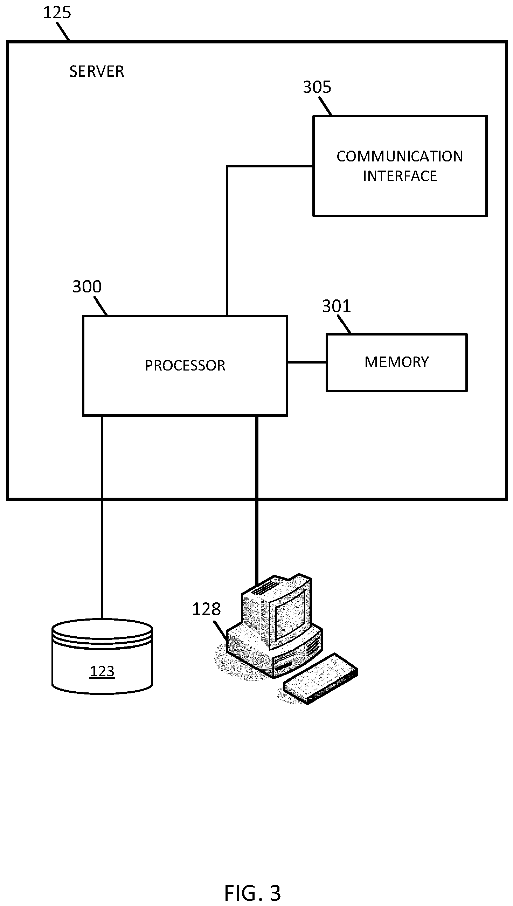

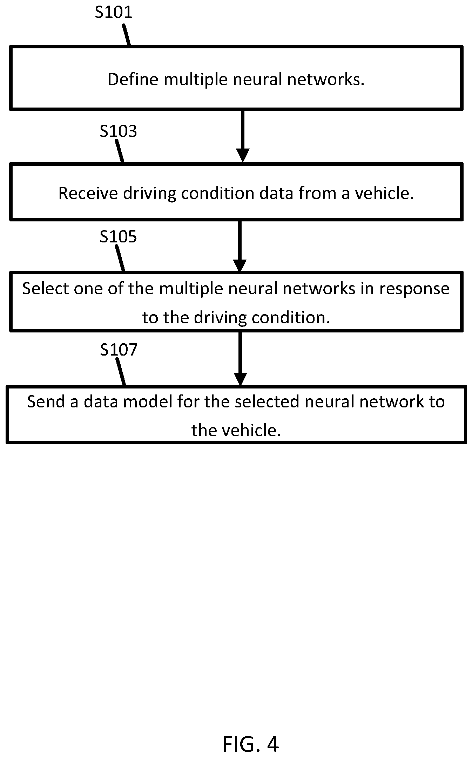

Figure 3 illustrates an example server implementation of the neural network training and selection system. Figure 3 illustrates an example server 125, which may apply to the system of Figure 1. The server 125 includes a processor 300, a communication interface 305, a memory 301, and a database 123. An input device (e.g., keyboard or personal computer 128) may be used to enter settings to the server 125. The settings may include settings for thresholds and other user preferences described herein. The settings may include the number of neural networks, the types of neural networks, the categories, environments or scenarios application to each of the neural networks, the number of layers of the neural networks. Additional, different, or fewer components may be provided in the server 125. Figure 4 illustrates an example flow chart of the server 125 for the neural network training and selection system.

At act S101, the processor 300 defines multiple neural networks according to data collected at vehicles. The processor 300 may receive data from a fleet of vehicles through communication interface 305. The vehicles may be traveling in a particular region or in different regions. The processor 300 may store the data in memory 301 for analysis. The processor 300 may determine a driving condition for the data collected at vehicles. In some examples, the processor 300 receives packets or messages of data included a driving condition indicator that establishes the conditions under which the data was collected. In other examples, the processor 300 analyzes the data to determine the conditions. As described in examples herein, the processor 300 calculated models for separate neural networks based on the driving condition for the data.

The multiple neural networks may be stored and indexed in memory 301 or database 123. The index may describe multiple driving conditions and an indicator for the associated neural network.

The processor 300 may include a learned model module including an application specific module or processor that generates the neural networks or another type of learned model. The processor 300 is an example means for defining multiple neural networks based on sensor data collected by a fleet of vehicles.

At act S103, after one or more of the neural networks has been defined in act S101, the processor 301 or the communication interface 305 receives additional driving condition data from a vehicle. While additional data may be received from multiple vehicles, act S103 (and subsequently acts S105 and S107) may be repeated for each vehicle. The additional driving condition data may include sensor data, or a driving condition indicator, that matches one of the driving conditions in act S101 for training one of the multiple neural networks. The communication interface 305 is an example means for receiving additional sensor data collected by a vehicle.

At act S105, the processor 300 selects one of the multiple neural networks in response to the driving condition. The processor 300 may identify the driving condition from the sensor data or a request from the vehicle 124. The processor 300 may access the index of neural networks in the database using the driving condition and select the closest match for the driving condition in the additional sensor data. The processor 300 is configured to select one of the defined neural networks in response to the additional driving condition data received from the vehicle.

The processor 300 may include a model selection module including an application specific module or processor that selects the neural network or another type of learned model. The processor is an example means for selecting a neural network or another type of learned model.

At act S107, the processor 300 or the communication interface sends the data for the neural network model that was selected in act S105 to the requesting vehicle 124 or mobile device 122. The data for the neural network model may include a list of attributes for the neural network. The list of attributes may include the number of layers and types of layers. The list of attributes may include the number of nodes, which may be assigned to the layers and include connections to other nodes and/or layers. The list of attributes may include weights or coefficients for the nodes. The list of attributes may include factor, multiple, and thresholds that relate the values output from the different nodes.

The processor 300 may include a model distribution module including an application specific module or processor that generates the neural networks or another type of learned model. The processor is an example means for sending a data model for the selected neural network to a vehicle.

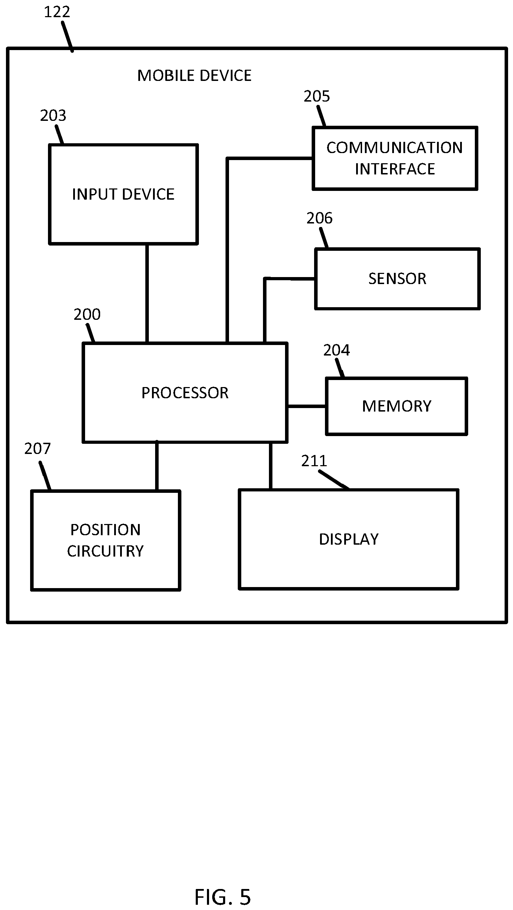

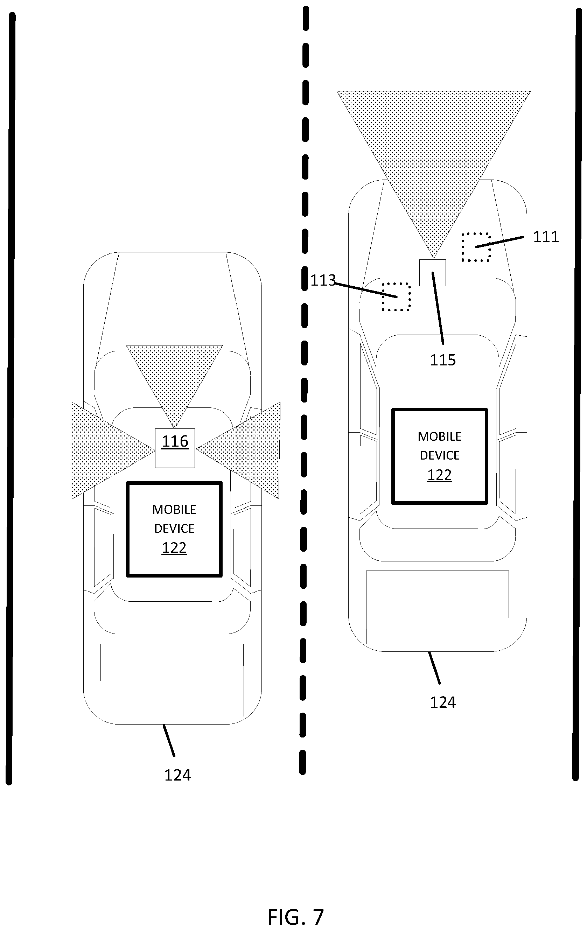

Figure 5 illustrates an example mobile device implementation of the dynamic system for exchanging neural network models based on driving conditions. Figure 5 illustrates an exemplary mobile device 122 of the system of Figure 1. The mobile device 122 includes a processor 200, a memory 204, an input device 203, a communication interface 205, position circuitry 207, a display 211, and a sensor 206. The sensor 206 may include one or more of the sensors described with respect to Figure 7. The input device 203 may receive commands from the user for default settings for the neural network or download of the neural network models. The default settings may include the number or types driving conditions that are identified, the size of the neural network that may be downloaded, and the types of data used to define the driving conditions.

The processor 200 may communicate with a vehicle ECU which operates one or more driving mechanisms (e.g., accelerator, brakes, steering device). Alternatively, the mobile device 122 may be the vehicle ECU, which operates the one or more driving mechanisms directly. The sensor 206 may include a camera, a LiDAR device, or another sensor described herein. The sensor 206 may detect congestion local to the mobile device 122. The sensor 206 may detect when an intersection is approaching. Additional, different, or fewer components are possible for the mobile device 122.

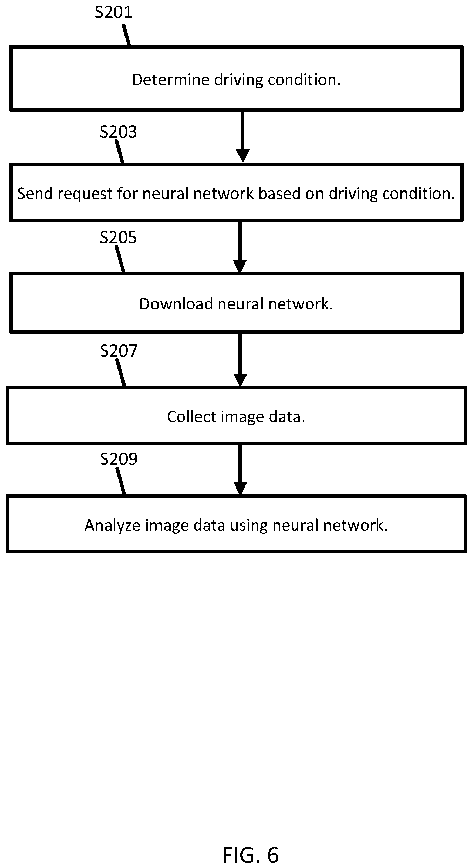

Figures 6 illustrates an example flow chart for the operation of the mobile device 122 . Additional, different, or fewer acts may be provided.

At act S201, the processor 200 determines a driving condition for the mobile device. Rather than a driving condition, an environmental condition, a temporal condition, a road condition, or a driver condition may be determined. The environment condition may be weather. The temporal condition may be time of day. The road condition may be the shape or size of the road. The driver condition may be the age, experience, or other demographic information for the driver. The condition determined by the processor 200 impacts how the vehicle is controlled. For example, when the driving condition indicates that the vehicle is traveling in snowy or rainy conditions, more stopping time may be required for controlling the vehicle. In another example, certain hazards may be more likely at certain times of day or in certain geographic locations.

The processor 200 may include a driving condition module including an application specific module or processor that determines the driving condition. The processor 200 is an example means for determining a driving condition.

At act S203, the processor 200 generates a request for a neural network based on the driving condition. The request may include the driving condition determined from act S201. Alternatively, the driving request may include a selection of the sensor data collected at the vehicle.

The processor 200 may include a request module including an application specific module or processor that requests the neural network or other model. The processor 200 is an example means for requesting the neural network.

At act S205, the processor 200 downloads a neural network, or an update to the neural network, in response to the request for the neural network. The neural network may be selected based on the driving conditions determined from the sensor data. The selected neural network may be downloaded via communication interface 205 from an external device such as the server 125. Alternatively, the processor 200 downloads or accesses the neural network from multiple possible neural networks stored at memory 204. For example, the possible neural networks may be embedded as resources in the memory 204 of the mobile device 122 before installation or operation of the mobile device 122. The mobile device my decompress or otherwise access the predetermined resource for the selected neural network in response to the selection of the neural network.

The processor 200 may include a download module including an application specific module or processor that requests the neural network or other model. The processor 200 is an example means for requesting the neural network.

At act S207, the sensor 206 collects image data. The processor 200 may receive the image data from the sensor 206. The processor 200 may perform one or more preprocessing algorithms on the image data. The image data may be sampled in time such that only portions of the image are retained for analysis. The image data may be filtered for the quality of the image. The image data may be filtered according to changes between subsequent images or a series of images. That is, images may be included that include at least one moving object as determined by a comparison with a preceding image. The image may be stored in memory 204 for analysis. In one embodiment, the image data displayed by display 211.

The processor 200 may include an image data module including an application specific module or processor that receives and processes the image data. The processor 200 or the sensor 206 is an example means for receiving the image data.

At act S209, the processor 200 analyzes the image data from act S207 using the neural network downloaded in act S205. The output of the neural network may describe one or more objects included in the image data. Example objects may be another vehicle, a guardrail, or an animal. The output of the neural network may be whether or not a hazard exists. The output of the neural network may be an indication of a maneuver that the vehicle should make (e.g., to avoid a hazard). The output of the neural network may be an indication that there is no hazard.

The processor 200 may include a learned model module including an application specific module or processor that analyzes the image data. The processor 200 or the sensor 206 is an example means for analyzing the image data.

The following examples describe applications for the output of the neural network or other learned model downloaded in response to driving conditions. In some examples, the output describes one or more objects in the vicinity of the vehicle. The vehicle driver may be presented with a warning in response to the objects in the vicinity of the vehicle. The vehicle may be controlled in response to the objects in the vicinity of the vehicle. The vehicle control may be a primary control such as brake, steering, or accelerator. The vehicle control may be a secondary control such as tire pressure, gear, turn signal, or others. The vehicle control may be an auxiliary control such as headlights, radio volume, seat recline, or others. The output of the neural network may be used to determine the position of the vehicle. The output of the neural network or other model may be the basis of navigation or routing for the vehicle 124 or the mobile device 122.

Figure 7 illustrates an exemplary vehicle 124 of the system of Figures 1. The vehicles 124 may include a variety of devices such as a global positioning system, a dead reckoning-type system, cellular location system, or combinations of these or other systems, which may be referred to as position circuitry or a position detector. The positioning circuitry may include suitable sensing devices that measure the traveling distance, speed, direction, and so on, of the vehicle 124. The positioning system may also include a receiver and correlation chip to obtain a GPS or GNSS signal. Alternatively or additionally, the one or more detectors or sensors may include an accelerometer built or embedded into or within the interior of the vehicle 124. The vehicle 124 may include one or more distance data detection device or sensor, such as a light detection and ranging (LiDAR) device. The distance data detection sensor may generate point cloud data. The distance data detection sensor may include a laser range finder that rotates a mirror directing a laser to the surroundings or vicinity of the collection vehicle on a roadway or another collection device on any type of pathway.

A connected vehicle includes a communication device and an environment sensor array for reporting the surroundings of the vehicle 124 to the server 125. The connected vehicle may include an integrated communication device coupled with an in-dash navigation system. The connected vehicle may include an ad-hoc communication device such as a mobile device 122 or smartphone in communication with a vehicle system. The communication device connects the vehicle to a network including at least one other vehicle and at least one server. The network may be the Internet or connected to the internet.

The sensor array may include one or more sensors configured to detect surroundings of the vehicle 124. The sensor array may include multiple sensors. Example sensors include an optical distance system such as LiDAR 116, an image capture system 115 such as a camera, a sound distance system such as sound navigation and ranging (SONAR), a radio distancing system such as radio detection and ranging (RADAR) or another sensor. The camera may be a visible spectrum camera, an infrared camera, an ultraviolet camera or another camera.

In some alternatives, additional sensors may be included in the vehicle 124. An engine sensor 111 may include a throttle sensor that measures a position of a throttle of the engine or a position of an accelerator pedal, a brake senor that measures a position of a braking mechanism or a brake pedal, or a speed sensor that measures a speed of the engine or a speed of the vehicle wheels. Another additional example, vehicle sensor 113, may include a steering wheel angle sensor, a speedometer sensor, or a tachometer sensor.

A mobile device 122 may be integrated in the vehicle 124, which may include assisted driving vehicles such as autonomous vehicles, highly assisted driving (HAD), and advanced driving assistance systems (ADAS). Any of these assisted driving systems may be incorporated into mobile device 122. Alternatively, an assisted driving device may be included in the vehicle 124. The assisted driving device may include memory, a processor, and systems to communicate with the mobile device 122. The assisted driving vehicles may respond to the output of the neural network or other model and other geographic data received from geographic database 123 and the server 125 to generate driving commands or navigation commands.

The term autonomous vehicle may refer to a self-driving or driverless mode in which no passengers are required to be on board to operate the vehicle. An autonomous vehicle may be referred to as a robot vehicle or an automated vehicle. The autonomous vehicle may include passengers, but no driver is necessary. These autonomous vehicles may park themselves or move cargo between locations without a human operator. Autonomous vehicles may include multiple modes and transition between the modes. The autonomous vehicle may steer, brake, or accelerate the vehicle based on the position of the vehicle in order, and may respond to the output of the neural network or other model and/or other geographic data received from geographic database 123 and the server 125 to generate driving commands or navigation commands. For example, the may provide a driving command to the vehicle 124 based on the output of the neural network or other model.

A highly assisted driving (HAD) vehicle may refer to a vehicle that does not completely replace the human operator. Instead, in a highly assisted driving mode, the vehicle may perform some driving functions and the human operator may perform some driving functions. Vehicles may also be driven in a manual mode in which the human operator exercises a degree of control over the movement of the vehicle. The vehicles may also include a completely driverless mode. Other levels of automation are possible. The HAD vehicle may control the vehicle through steering or braking in response to the on the position of the vehicle and may respond to the output of the neural network or other model and other geographic data received from geographic database 123 and the server 125 to generate driving commands or navigation commands.

Similarly, ADAS vehicles include one or more partially automated systems in which the vehicle alerts the driver. The features are designed to avoid collisions automatically. Features may include adaptive cruise control, automate braking, or steering adjustments to keep the driver in the correct lane. ADAS vehicles may issue warnings for the driver based on the position of the vehicle or based on the output of the neural network or other model and other geographic data received from geographic database 123 and the server 125 to generate driving commands or navigation commands.

The routing instructions may be provided by display 211. The mobile device 122 may be configured to execute routing algorithms to determine an optimum route to travel along a road network from an origin location to a destination location in a geographic region. Using input(s) including map matching values from the server 125, a mobile device 122 examines potential routes between the origin location and the destination location to determine the optimum route. The mobile device 122, which may be referred to as a navigation device, may then provide the end user with information about the optimum route in the form of guidance that identifies the maneuvers required to be taken by the end user to travel from the origin to the destination location. Some mobile devices 122 show detailed maps on displays outlining the route, the types of maneuvers to be taken at various locations along the route, locations of certain types of features, and so on. Possible routes may be calculated based on a Dijkstra method, an A-star algorithm or search, and/or other route exploration or calculation algorithms that may be modified to take into consideration assigned cost values of the underlying road segments, which may be determined based on the output of the neural network or other model and other factors.

The mobile device 122 may be a personal navigation device ("PND"), a portable navigation device, a mobile phone, a personal digital assistant ("PDA"), a watch, a tablet computer, a notebook computer, and/or any other known or later developed mobile device or personal computer. The mobile device 122 may also be an automobile head unit, infotainment system, and/or any other known or later developed automotive navigation system. Non-limiting embodiments of navigation devices may also include relational database service devices, mobile phone devices, car navigation devices, and navigation devices used for air or water travel.

The geometric features may include curvature, slope, or other features. The curvature of a road segment describes a radius of a circle that in part would have the same path as the road segment. The slope of a road segment describes the difference between the starting elevation and ending elevation of the road segment. The slope of the road segment may be described as the rise over the run or as an angle.

The restrictions for traveling the roads or intersections may include turn restrictions, travel direction restrictions, speed limits, lane travel restrictions or other restrictions. Turn restrictions define when a road segment may be traversed onto another adjacent road segment. For example, when a node includes a "no left turn" restriction, vehicles are prohibited from turning left from one road segment to an adjacent road segment. Turn restrictions may also restrict that travel from a particular lane through a node. For example, a left turn lane may be designated so that only left turns (and not traveling straight or turning right) is permitted from the left turn late. Another example of a turn restriction is a "no U-turn" restriction.

Travel direction restriction designate the direction of travel on a road segment or a lane of the road segment. The travel direction restriction may designate a cardinal direction (e.g., north, southwest, etc.) or may designate a direction from one node to another node. The roadway features may include the number of lanes, the width of the lanes, the functional classification of the road, or other features that describe the road represented by the road segment. The functional classifications of roads may include different levels accessibility and speed. An arterial road has low accessibility but is the fastest mode of travel between two points. Arterial roads are typically used for long distance travel. Collector roads connect arterial roads to local roads. Collector roads are more accessible and slower than arterial roads. Local roads are accessible to individual homes and business. Local roads are the most accessible and slowest type of road.

The databases may also include other attributes of or about the roads such as, for example, geographic coordinates, street names, address ranges, speed limits, turn restrictions at intersections, and/or other navigation related attributes (e.g., one or more of the road segments is part of a highway or toll way, the location of stop signs and/or stoplights along the road segments), as well as points of interest (POIs), such as gasoline stations, hotels, restaurants, museums, stadiums, offices, automobile dealerships, auto repair shops, buildings, stores, parks, etc. The databases may also contain one or more node data record(s) which may be associated with attributes (e.g., about the intersections) such as, for example, geographic coordinates, street names, address ranges, speed limits, turn restrictions at intersections, and other navigation related attributes, as well as POIs such as, for example, gasoline stations, hotels, restaurants, museums, stadiums, offices, automobile dealerships, auto repair shops, buildings, stores, parks, etc. The geographic data may additionally or alternatively include other data records such as, for example, POI data records, topographical data records, cartographic data records, routing data, and maneuver data.

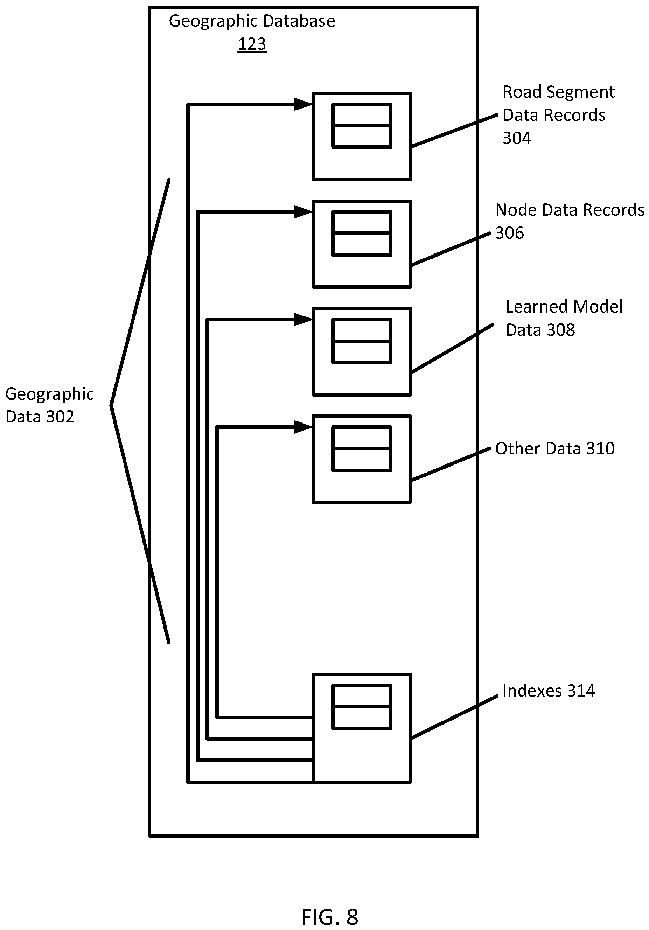

In Figure 8, the geographic database 123 may contain at least one road segment database record 304 (also referred to as "entity" or "entry") for each road segment in a particular geographic region. The geographic database 123 may also include a node database record 306 (or "entity" or "entry") for each node in a particular geographic region. The terms "nodes" and "segments" represent only one terminology for describing these physical geographic features, and other terminology for describing these features is intended to be encompassed within the scope of these concepts. The geographic database 123 may also include location fingerprint data for specific locations in a particular geographic region.

The geographic database 123 may include other kinds of data 310. The other kinds of data 310 may represent other kinds of geographic features or anything else. The other kinds of data may include POI data. For example, the POI data may include POI records comprising a type (e.g., the type of POI, such as restaurant, hotel, city hall, police station, historical marker, ATM, golf course, etc.), location of the POI, a phone number, hours of operation, etc.

The geographic database 123 also includes indexes 314. The indexes 314 may include various types of indexes that relate the different types of data to each other or that relate to other aspects of the data contained in the geographic database 123. For example, the indexes 314 may relate the nodes in the node data records 306 with the end points of a road segment in the road segment data records 304.

As another example, the indexes 314 may relate lane different learned models or neural networks 308 with a road segment in the segment data records 304 or a geographic coordinate. An index 314 may, for example, store data for the neural networks 308 at different times in the future. The index 314 may include an array neural networks associated with different times, seasons, weather, or other driving conditions.

The geographic database 123 may also include other attributes of or about roads such as, for example, geographic coordinates, physical geographic features (e.g., lakes, rivers, railroads, municipalities, etc.) street names, address ranges, speed limits, turn restrictions at intersections, and/or other navigation related attributes (e.g., one or more of the road segments is part of a highway or toll way, the location of stop signs and/or stoplights along the road segments), as well as POIs, such as gasoline stations, hotels, restaurants, museums, stadiums, offices, automobile dealerships, auto repair shops, buildings, stores, parks, municipal facilities, other businesses, etc. The geographic database 123 may also contain one or more node data record(s) 306 which may be associated with attributes (e.g., about the intersections) such as, for example, geographic coordinates, street names, address ranges, speed limits, turn restrictions at intersections, and other navigation related attributes, as well as POIs such as, for example, gasoline stations, hotels, restaurants, museums, stadiums, offices, automobile dealerships, auto repair shops, buildings, stores, parks, etc. The geographic data 302 may additionally or alternatively include other data records such as, for example, POI data records, topographical data records, cartographic data records, routing data, and maneuver data. Other contents of the database 123 may include temperature, altitude or elevation, lighting, sound or noise level, humidity, atmospheric pressure, wind speed, the presence of magnetic fields, electromagnetic interference, or radio- and micro-waves, cell tower and wi-fi information, such as available cell tower and wi-fi access points, and attributes pertaining to specific approaches to a specific location.

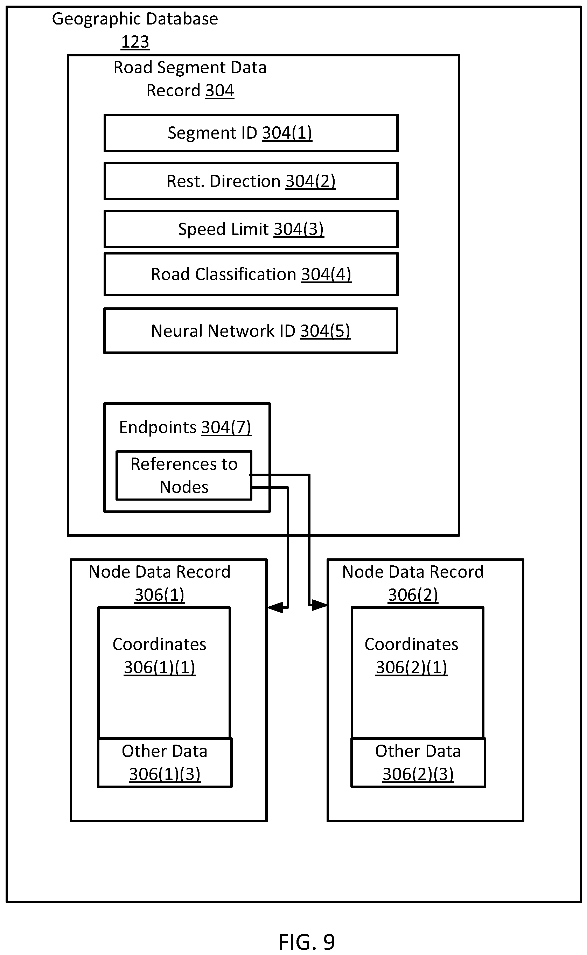

Figure 9 shows some of the components of a road segment data record 304 contained in the geographic database 123 according to one embodiment. The road segment data record 304 may include a segment ID 304(1) by which the data record can be identified in the geographic database 123. Each road segment data record 304 may have associated with it information (such as "attributes", "fields", etc.) that describes features of the represented road segment. The road segment data record 304 may include data 304(2) that indicate the restrictions, if any, on the direction of vehicular travel permitted on the represented road segment. The road segment data record 304 may include data 304(3) that indicate a speed limit or speed category (i.e., the maximum permitted vehicular speed of travel) on the represented road segment. The road segment data record 304 may also include classification data 304(4) indicating whether the represented road segment is part of a controlled access road (such as an expressway), a ramp to a controlled access road, a bridge, a tunnel, a toll road, a ferry, and so on. The road segment data record may include location fingerprint data, for example a set of sensor data for a particular location.

The geographic database 123 may include road segment data records 304 (or data entities) that describe a neural network identifier 304(5) that indicates the neural network that should be used for data collected on the road segment or type of road segment for the road segment data record 304.

Additional schema may be used to describe road objects. The attribute data may be stored in relation to a link / segment 304, a node 306, a strand of links, a location fingerprint, an area, or a region. The geographic database 123 may store information or settings for display preferences. The geographic database 123 may be coupled to a display. The display may be configured to display the roadway network and data entities using different colors or schemes.

The road segment data record 304 also includes data 304(7) providing the geographic coordinates (e.g., the latitude and longitude) of the end points of the represented road segment. In one embodiment, the data 304(7) are references to the node data records 306 that represent the nodes corresponding to the end points of the represented road segment.

The road segment data record 304 may also include or be associated with other data 304(7) that refer to various other attributes of the represented road segment. The various attributes associated with a road segment may be included in a single road segment record or may be included in more than one type of record which cross-references to each other. For example, the road segment data record 304 may include data identifying what turn restrictions exist at each of the nodes which correspond to intersections at the ends of the road portion represented by the road segment, the name, or names by which the represented road segment is identified, the street address ranges along the represented road segment, and so on.

Figure 9 also shows some of the components of a node data record 306 that may be contained in the geographic database 123. Each of the node data records 306 may have associated information (such as "attributes", "fields", etc.) that allows identification of the road segment(s) that connect to it and/or its geographic position (e.g., its latitude and longitude coordinates). The node data records 306(1) and 306(2) include the latitude and longitude coordinates 306(1)(1) and 306(2)(1) for their node, the node data records 306(1) and 306(2) may also include other data 306(1)(3) and 306(2)(3) that refer to various other attributes of the nodes.

The geographic database 123 may be maintained by a content provider (e.g., a map developer). By way of example, the map developer may collect geographic data to generate and enhance the geographic database 123. The map developer may obtain data from sources, such as businesses, municipalities, or respective geographic authorities. In addition, the map developer may employ field personnel to travel throughout a geographic region to observe features and/or record information about the roadway. Remote sensing, such as aerial or satellite photography, may be used. The database 123 may be incorporated in or connected to the server 125.

The geographic database 123 and the data stored within the geographic database 123 may be licensed or delivered on-demand. Other navigational services or traffic server providers may access the location fingerprint data, traffic data and/or the lane line object data stored in the geographic database 123.

The processor 200 and/or processor 300 may include a general processor, digital signal processor, an application specific integrated circuit (ASIC), field programmable gate array (FPGA), analog circuit, digital circuit, combinations thereof, or other now known or later developed processor. The processor 200 and/or processor 300 may be a single device or combinations of devices, such as associated with a network, distributed processing, or cloud computing.

The memory 204 and/or memory 301 may be a volatile memory or a non-volatile memory. The memory 204 and/or memory 301 may include one or more of a read only memory (ROM), random access memory (RAM), a flash memory, an electronic erasable program read only memory (EEPROM), or other type of memory. The memory 204 and/or memory 801 may be removable from the mobile device 122, such as a secure digital (SD) memory card.

The communication interface 205 and/or communication interface 305 may include any operable connection. An operable connection may be one in which signals, physical communications, and/or logical communications may be sent and/or received. An operable connection may include a physical interface, an electrical interface, and/or a data interface. The communication interface 205 and/or communication interface 305 provides for wireless and/or wired communications in any now known or later developed format.

The databases 123 may include geographic data used for traffic and/or navigation-related applications. The geographic data may include data representing a road network or system including road segment data and node data. The road segment data represent roads, and the node data represent the ends or intersections of the roads. The road segment data and the node data indicate the location of the roads and intersections as well as various attributes of the roads and intersections. Other formats than road segments and nodes may be used for the geographic data. The geographic data may include structured cartographic data or pedestrian routes.

The databases may include historical traffic speed data for one or more road segments. The databases may also include traffic attributes for one or more road segments. A traffic attribute may indicate that a road segment has a high probability of traffic congestion.

The input device 203 may be one or more buttons, keypad, keyboard, mouse, stylus pen, trackball, rocker switch, touch pad, voice recognition circuit, or other device or component for inputting data to the mobile device 122. The input device 203 and display 211 may be combined as a touch screen, which may be capacitive or resistive. The display 211 may be a liquid crystal display (LCD) panel, light emitting diode (LED) screen, thin film transistor screen, or another type of display. The output interface of the display 211 may also include audio capabilities, or speakers. In an embodiment, the input device 203 may involve a device having velocity detecting abilities.

The positioning circuitry 207 may include suitable sensing devices that measure the traveling distance, speed, direction, and so on, of the mobile device 122. The positioning system may also include a receiver and correlation chip to obtain a GPS signal. Alternatively or additionally, the one or more detectors or sensors may include an accelerometer and/or a magnetic sensor built or embedded into or within the interior of the mobile device 122. The accelerometer is operable to detect, recognize, or measure the rate of change of translational and/or rotational movement of the mobile device 122. The magnetic sensor, or a compass, is configured to generate data indicative of a heading of the mobile device 122. Data from the accelerometer and the magnetic sensor may indicate orientation of the mobile device 122. The mobile device 122 receives location data from the positioning system. The location data indicates the location of the mobile device 122.

The positioning circuitry 207 may include a Global Positioning System (GPS), Global Navigation Satellite System (GLONASS), or a cellular or similar position sensor for providing location data. The positioning system may utilize GPS-type technology, a dead reckoning-type system, cellular location, or combinations of these or other systems. The positioning circuitry 207 may include suitable sensing devices that measure the traveling distance, speed, direction, and so on, of the mobile device 122. The positioning system may also include a receiver and correlation chip to obtain a GPS signal. The mobile device 122 receives location data from the positioning system. The location data indicates the location of the mobile device 122.

The position circuitry 207 may also include gyroscopes, accelerometers, magnetometers, or any other device for tracking or determining movement of a mobile device. The gyroscope is operable to detect, recognize, or measure the current orientation, or changes in orientation, of a mobile device. Gyroscope orientation change detection may operate as a measure of yaw, pitch, or roll of the mobile device.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry. In an embodiment, a vehicle may be considered a mobile device, or the mobile device may be integrated into a vehicle.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. These examples may be collectively referred to as a non-transitory computer readable medium.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

The following example embodiments of the invention are also disclosed:
Embodiment 1:
   A method for analyzing data collected at a vehicle through dynamic selection of a neural network, the method further comprising:
   receiving sensor data collected at the vehicle;
   generating a neural network request;
   selecting a neural network, from a plurality of neural networks, based on the neural network request and the sensor data;
   receiving image data collected at the vehicle; and
   performing, via a processor, an analysis of the image data using the selected neural network.
Embodiment 2:
   The method of embodiment 1, further comprising:
   sending the neural network request based on the sensor data to a server; and
   downloading the selected neural network from the server.
Embodiment 3:
   The method of embodiment 1 or 2, further comprising:
   identifying a driving condition from the sensor data, wherein the neural network request includes the driving condition.
Embodiment 4:
   The method of any of embodiments 1 to 3, wherein the neural network downloaded from the server is trained on sensor data related to the driving condition and the neural network is selected from the plurality of neural networks according to the driving condition.
Embodiment 5:
   The method of any of embodiments 1 to 4, wherein the sensor data includes light sensor values, humidity sensor values, pressure sensor values or temperature sensor values.
Embodiment 6:
   The method of any of embodiments 1 to 5, wherein the sensor data includes location data associated with a location of the vehicle.
Embodiment 7:
   The method of any of embodiments 1 to 6, further comprising:
   identifying a geographic or topographic environment of the vehicle, wherein the neural network request includes a driving condition based on the geographic or topographic environment of the vehicle.
Embodiment 8:
   The method of any of embodiments 1 to 7, wherein the sensor data indicates time of day, season, or weather in vicinity of the vehicle.
Embodiment 9:
   The method of any of embodiments 1 to 8, further comprising:
   filtering the sensor data collected at the vehicle; and
   sending the filtered sensor data, wherein the neural network is trained using the filtered sensor data.
Embodiment 10:
   An apparatus, configured to perform and/or control the method of any of embodiments 1-9 or comprising means for performing and/or controlling any of embodiments 1-9.
Embodiment 11:
   An apparatus, comprising at least one processor and at least one memory including computer program code for one or more programs, the at least one memory and the computer program code configured to, with the at least one processor, to perform and/or control the method of any of embodiments 1-9.
Embodiment 12:
   A computer program comprising instructions operable to cause a processor to perform and/or control the method of any of embodiments 1-9, when the computer program is executed on the processor.

## Claims

1. A method for analyzing data collected at a vehicle through dynamic selection of a neural network, the method further comprising:
receiving sensor data collected at the vehicle;
generating a neural network request;
selecting a neural network, from a plurality of neural networks, based on the neural network request and the sensor data;
receiving image data collected at the vehicle; and
performing, via a processor, an analysis of the image data using the selected neural network.

2. The method of claim 1, further comprising:
sending the neural network request based on the sensor data to a server; and
downloading the selected neural network from the server.

3. The method of claim 1, further comprising:
identifying a driving condition from the sensor data, wherein the neural network request includes the driving condition.

4. The method of claim 1, wherein the sensor data includes light sensor values, humidity sensor values, pressure sensor values or temperature sensor values.

5. The method of claim 1, wherein the sensor data includes location data associated with a location of the vehicle.

6. The method of claim 1, further comprising:
filtering the sensor data collected at the vehicle; and
sending the filtered sensor data, wherein the neural network is trained using the filtered sensor data.

7. An apparatus for vehicle parking navigation and communication, the apparatus further comprising:
an environment module configured to sample at least one type of sensor data collected at a vehicle;
a road network module configured to sample location data collected at the vehicle;
a monitor condition engine configured to analyze the sensor data and the location data to generate a neural network request; and
a neural network module configured to operate a neural network in response to the neural network request.

8. The apparatus of claim 7, further comprising:
an image sensor configured to collect image data, wherein the neural network analyzes the image data.

9. The apparatus of claim 7, wherein the monitor condition engine is configured to identify a driving condition based on the sensor data, the location data, or a combination of the sensor data and the location data.

10. The apparatus of claim 9, wherein the driving condition is an environmental condition in vicinity of the vehicle or a geographical or topographical condition in vicinity of the vehicle.

11. The apparatus of claim 9, further comprising:
a memory configured to store a plurality of neural networks, wherein the operated neural network is selected from the plurality of neural networks in response to the neural network request.

12. The apparatus of claim 9, wherein the neural network is selected from a plurality of neural networks according to the driving condition.

13. An apparatus for managing multiple neural networks for driving conditions, the apparatus comprising:
a neural network database configured to store a plurality of neural networks;
a communication interface configured to receive condition data for a vehicle from a vehicle device; and
a neural network controller configured to select a neural network from the plurality of neural networks.

14. The apparatus of claim 13, wherein the condition data is real time data for a vicinity of the vehicle device.

15. The apparatus of claim 13, wherein the condition data describes an attribute of a path traveled by the vehicle device.
